# EUROPEAN PATENT SPECIFICATION

(11) **EP 1 938 719 B1**
(45) Date of publication and mention of the grant of the patent: **16.09.2009**
(21) Application number: 07110905.2
(22) Date of filing: 22.06.2007
(51) Int. Cl.: A47J 31/46, A47J 31/56

(54) **Two-in-one beverage mechanism**
Zwei-in-einem-Getränkemechanismus
Mécanisme de boisson deux-en-un

(43) Date of publication of application: 02.07.2008
(73) Proprietor: Klub Manufacturing Corp., Luju Shiang Taoyuan Hsien, Taiwan (CN)
(72) Inventor: Yang, Yen-pin, Taoyuan Hsien (TW)
(74) Representative: Viering, Jentschura & Partner

(56) References cited:
- EP-A- 1 764 014
- EP-A1- 0 577 561
- GB-A- 920 387

## Description

### BACKGROUND OF THE INVENTION

### Field of the Invention

The present invention relates to a two-in-one beverage mechanism, and more particularly to a machine base combined with a coffee machine and a tea machine together to save the cost and space and to operate easily as well.

### Description of the Prior Art

There are various coffee and tea table-top machines on the market. Because tea and coffee are different products, their making processes are different.

As disclosed in US Patent No. 5,855,162, a coffee machine includes a body, a water heater, and a control device to provide hot water at predetermined schedule to make coffee. This is appropriate for a coffer machine, but it can not make a good tea drink which must use hot water to soak the tea leaf and covered for couple minutes. The water later has to be dumped and the tea needs to be refilled with hot water. This can be refilled with hot water for two or three times for drink.

The processes are all the same, however a different product has a different character and requires different treatment. Therefore, a tea machine is derived, which comprises a body, a soaking tank, a filter and a switch. The tea machine is controlled by a switch to provide hot water into the soaking tank and the filter to soak tea. The beginning taste of tea is thick. The more water is poured in, the thinner the taste it will be.

In many cases, people use two machines, one for coffee and one for tea, in order to provide the best result. This takes more space to store and requires more cost. Document EP-0577561 discloses a machine according to the preamble of claim 1.

### SUMMARY OF THE INVENTION

The present invention relates to a two-in-one beverage mechanism which can provide both coffee and tea beverages without the necessary of two separate machines.

According to the present invention, there is provided a two-in-one beverage mechanism comprising a machine base, a coffee machine, and a tea machine, wherein said machine base comprises a main water inlet pipe, said coffee machine comprises a coffee boiler, and said tea machine comprises a tea boiler, characterized by:
said main water inlet pipe of said machine base being externally connected with a first water inlet pipe, a second water inlet pipe, and a third water inlet pipe;
said coffee boiler of said coffee machine comprising a water outlet tank and a heater therein, said water outlet tank and said coffee boiler being not interconnected, said coffee boiler being connected with said first water inlet pipe, a solenoid valve being provided on said first water inlet pipe, one end of said water outlet tank being connected with said second water inlet pipe, a flow meter being provided on said second water inlet pipe, the other end of said water outlet tank being connected with a water outlet pipe and a water outlet device;
said tea boiler of said tea machine being connected with said third water inlet pipe, said tea boiler comprising a heater and connecting with a water outlet pipe and a water outlet device, a flow meter being provided on said water outlet pipe.

Preferably, said coffee boiler of said coffee machine is provided with a water probe and a steam outlet.

Preferably, said tea boiler of said tea machine is provided with a temperature controller.

It is the primary object of the present invention to provide a two-in-one beverage mechanism, which saves parts and is cost-effective.

It is another object of the present invention to provide a two-in-one beverage mechanism, which saves storage space.

It is a further object of the present invention to provide a two-in-one beverage mechanism, which is convenient in use.

### BRIEF DESCRIPTION OF THE DRAWINGS

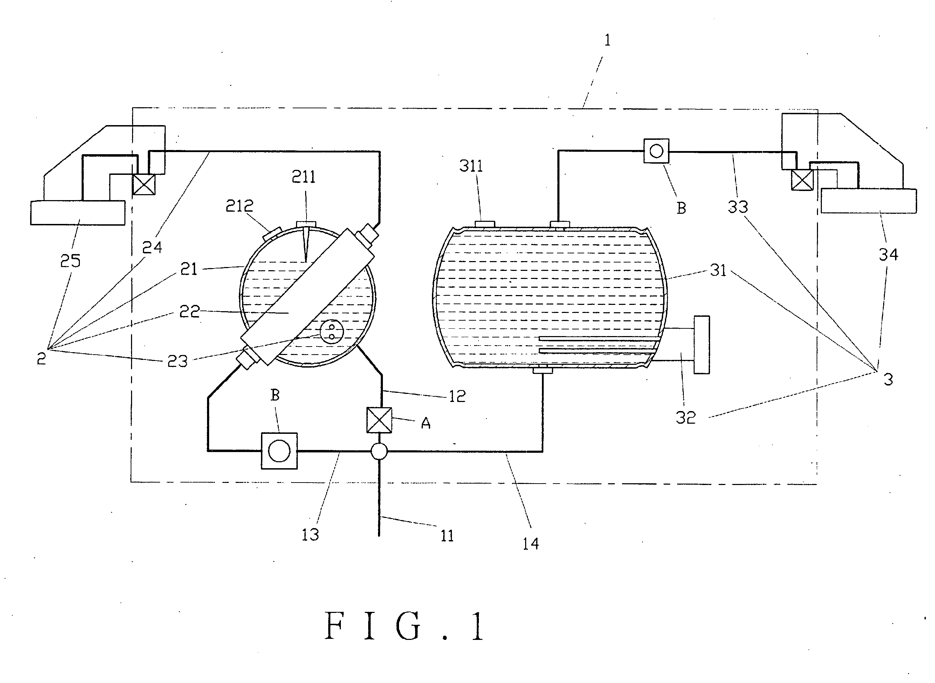

Fig. 1 is a diagrammatic view of a preferred embodiment of the present invention.

### DETAILED DESCRIPTION OF THE PREFERRED EMBODIMENT

As shown in FIG. 1, a preferred embodiment of the present invention comprises a machine base (1), a coffee machine (2), and a tea machine (3).

The machine base (1) comprises a main water inlet pipe (11). The main water inlet pipe (11) is externally connected with a first water inlet pipe (12), a second water inlet pipe (13), and a third water inlet pipe (14).

The coffee machine (2) comprises a coffee boiler (21). The coffee boiler (21) comprises a water outlet tank (22) and a heater (23) therein. The water outlet tank (22) and the coffee boiler (21) are not interconnected. The hot water in the coffee boiler (21) is used to warm up the water in the water outlet tank (22). The coffee boiler (21) is connected with the first water inlet pipe (12). A solenoid valve (A) is provided on the first water inlet pipe (12). One end of the water outlet tank (22) is connected with the second water inlet pipe (13). A flow meter (B) is provided on the second water inlet pipe (13). The other end of the water outlet tank (22) is connected with a water outlet pipe (24) and a water outlet device (25).

The tea machine (3) comprises a tea boiler (31). The tea boiler (31) is connected with the third water inlet pipe (14). The tea boiler (31) comprises a heater (32), and is connected with a water outlet pipe (33) and a water outlet device (34). A flow meter (B) is provided on the water outlet pipe (33).

The coffee boiler (21) further comprises a water probe (211) and a steam outlet (212). The tea boiler (31) further comprises a temperature controller (311).

To operate the present invention, pump water through the main water inlet pipe (11) into the first water inlet pipe (12), the second water inlet pipe (13), and the third water inlet pipe (14). The first water inlet pipe (12) is connected to the coffee boiler (21) to supply water to the coffee boiler (21). The water in the coffee boiler (21) is warmed up by the heater (23). The water probe (211) of the coffee boiler (21) is adapted to control the water in 70 to 80 percent in the coffee boiler (21) as it is predetermined set. When the water boils, the steam will evaporate through the steam outlet (212) for another use.

The second water inlet pipe (13) is connected to the water outlet tank (22) to supply water to the water outlet tank (22). The water in the water outlet tank (22) is heated by the heated water in the coffee boiler (21). The temperature of the water is set at the most appropriate degrees and the hot water flows through the water outlet pipe (24) to the water outlet device (25). The hot water later will be poured into the coffee powder or ground coffee to make best taste coffee.

The third water inlet pipe (14) is connected to the tea boiler (31) to supply water to the tea boiler (31). The water in the tea boiler (31) is heated by the heater (32). The temperature controller (311) is adapted to control the temperature of the water in the tea boiler (31). The heated water in the tea boiler (31) is delivered through the water outlet pipe (33) to the water outlet device (34) and poured into tea leaves or a tea bag to make best taste tea.

The coffee machine (2) and the tea machine (3) are assembled together to the common machine base (1). Both the machines share the base, the water inlet pipe and the electric wires to save the cost and to make the machine easy to operate.

## Claims

1. A two-in-one beverage mechanism comprises a machine base (1), a coffee machine (2), and a tea machine (3), wherein said machine base (1) comprises a main water inlet pipe (11), said coffee machine (2) comprises a coffee boiler (21), and said tea machine (3) comprises a tea boiler (31), **characterized by**:
said main water inlet pipe (11) of said machine base (1) being externally connected with a first water inlet pipe (12), a second water inlet pipe (13), and a third water inlet pipe (14);
said coffee boiler (21) of said coffee machine (2) comprising a water outlet tank (22) and a heater (23) therein, said water outlet tank (22) and said coffee boiler (21) being not interconnected, said coffee boiler (21) being connected with said first water inlet pipe (12), a solenoid valve (A) being provided on said first water inlet pipe (12), one end of said water outlet tank (22) being connected with said second water inlet pipe (13), a flow meter (B) being provided on said second water inlet pipe (13), the other end of said water outlet tank (22) being connected with a water outlet pipe (24) and a water outlet device (25);
said tea boiler (31) of said tea machine (3) being connected with said third water inlet pipe (14), said tea boiler (31) comprising a heater (32) and connecting with a water outlet pipe (33) and a water outlet device (34), a flow meter (B) being provided on said water outlet pipe (33).

2. The two-in-one beverage mechanism, as recited in claim 1, wherein said coffee boiler (21) of said coffee machine (2) is provided with a water probe (211) and a steam outlet (212).

3. The two-in-one beverage mechanism, as recited in claim 1, wherein said tea boiler (31) of said tea machine (3) is provided with a temperature controller (311).

## Patentansprüche

1. Eine zwei in einem Getränkevorrichtung aus einem Maschinensockel (1), einer Kaffeemaschine (2), und einer Teemaschine (3), wobei der genannte Maschinensockel (1) aus einem Haupt-Wasserzulaufrohr (11), die genannte Kaffeemaschine (2) aus einem Kaffeekocher (21), und die genannte Teemaschine (3) aus einem Teekocher (31) bestehen, wobei:
das genannte Haupt-Wasserzulaufrohr (11) des genannten Maschinensockels (1) extern mit einem ersten Wasserzulaufrohr (12), einem zweiten Wasserzulaufrohr (13) und einem dritten Wasserzulaufrohr (14) verbunden ist;
der genannte Kaffeekocher (21) der genannten Kaffeemaschine (2) der aus einem Wasserauslassbehälter (22) und einem darin befindlichen Erhitzer (23) besteht, wobei der genannte Wasserauslassbehälter (22) und der genannte Kaffeekocher (21) nicht miteinander verbunden sind, der genannte Kaffeekocher (21) mit dem genannten ersten Wasserzulaufrohr (12) verbunden ist, ein Magnetventil (A) das an dem genannten ersten Wasserzulaufrohr (12) angebracht ist, wobei ein Ende des genannten Wasserauslassbehälters (22) mit dem genannten zweiten Wasserzulaufrohr (13) verbunden ist, ein Durchflussmesser (B) an dem genannten zweiten Wasserzulaufrohr (13) angebracht ist, und das andere Ende des genannten Wasserauslassbehälters (22) mit einem Wasserauslassrohr (24) und einer Wasserauslassvorrichtung (25) verbunden ist;
der genannte Teekocher (31) der genannten Teemaschine (3) ist mit dem genannten dritten Wasserzulaufrohr (14) verbunden, der genannte Teekocher (31) besteht aus einem Erhitzer (32) und ist mit einem Wasserauslassrohr (33) und einem Wasserauslassbehälter (34) verbunden, wobei ein Durchflussmesser (B) an dem genannten Wasserauslassrohr (33) angebracht ist.

2. Die zwei in einem Getränkevorrichtung, gemäß Anspruch 1, wobei der genannte Kaffeekocher (21) der genannten Kaffeemaschine (2) mit einer Wassersonde (211) und einem Dampfauslass (212) ausgestattet ist.

3. Die zwei in einem Getränkevorrichtung, gemäß Anspruch 1, wobei der genannte Teekocher (31) der genannten Teemaschine (3) mit einem Temperaturregler (311) ausgestattet ist.

## Revendications

1. Un mécanisme à boissons 2 en 1 comprenant une machine (1), une machine à café (2) et une machine à thé (3). La machine (1) comprend un tuyau d'entrée d'eau principal (11), la machine à café (2) comprend une chaudière à café (21) et la machine à thé (3) comprend une chaudière à thé (31), **caractérisé par** :
le tuyau d'entrée d'eau principal (11) de ladite machine (1) est connecté de façon externe avec un premier tuyau d'entrée d'eau (12), un second tuyau d'entrée d'eau (13) et un troisième tuyau d'entrée d'eau (14);
la chaudière à café (21) de ladite machine à café (2) comprend un récipient de sortie d'eau (22) et un chauffe-eau (23), le récipient de sortie d'eau (22) et la chaudière à café (21) ne sont pas connecté l'un à l'autre, la chaudière à café (21) est connectée audit premier tuyau d'entrée d'eau (12), une soupape solénoïde (A) est disposée sur ledit premier tuyau d'entrée d'eau (12), une extrémité du récipient de sortie d'eau (22) est connectée au second tuyau d'entrée d'eau (13), un débit-mètre (B) est disposé sur le second tuyau d'entrée d'eau ( 13), l'autre extrémité du récipient de sortie d'eau (22) étant connectée à un tuyau de sortie d'eau (24) et à un dispositif de sortie d'eau (25);
la chaudière à thé (31) de la machine à thé (3) est connectée à un troisième tuyau d'entrée d'eau (14), la chaudière à thé (31) comprend une chaudière (32) et est connectée à un tuyau de sortie d'eau (33) et un dispositif de sortie d'eau (34), un débit-mètre (B) est disposé sur le tuyau de sortie d'eau (33).

2. Le mécanisme à boisson 2-en-1 tel que décrit dans la revendication 1, dans laquelle la chaudière à café (21) de la machine à café (2) comprend une sonde d'eau (211) et un dispositif d'évacuation de la vapeur (212).

3. Le mécanisme à boisson 2-en-1 tel que décrit dans la revendication 1, dans laquelle la chaudière à thé (31) de la machine à thé (3) comprend un dispositif de contrôle de la température (311).
